Europäisches Patentamt

European Patent Office

Office européen des brevets

(11) Publication number: **0 456 436 A2**

# EUROPEAN PATENT APPLICATION

(21) Application number: **91304061.4**

(22) Date of filing: **03.05.91**

(51) Int. Cl.5: **H02J 7/00, B01L 3/02**

(30) Priority: **08.05.90 FI 902305**

(43) Date of publication of application:
**13.11.91 Bulletin 91/46**

(84) Designated Contracting States:
**AT BE CH DE DK ES FR GB GR IT LI LU NL SE**

(71) Applicant: **BIOHIT OY**
**Verkkosaarenkatu 4**
**SF-00500 Helsinki(FI)**

(72) Inventor: **Suovaniemi, Osmo**
**Verkkosaarenkatu 4**
**SF-00500 Helsinki(FI)**

(74) Representative: **Beresford, Keith Denis Lewis et al**
**BERESFORD & Co. 2-5 Warwick Court High Holborn.**
**London WC1R 5DJ(GB)**

(54) **Pipette charging system.**

(57) The invention concerns a charging system for a manual pipette, comprising a charger (1) connectable to a power source and a set of storage batteries in the pipette (2). As taught by the invention, the charger comprises a primary winding (3) which connects to the power source and the pipette (2) comprises a secondary- winding (4) connecting with the set of storage batteries so that when the primary winding and the secondary winding are disposed close to each other, free from galvanic contact with each other, the voltage acting in the primary winding will in the secondary winding induce a voltage which in the secondary circuit produces a current charging the set of storage batteries.

Fig.1

The present invention concerns a charging system, as defined in the preamble to Claim 1, for a manual pipette.

The electric energy required for charging manual pipettes is derived from a storage battery or from batteries. The use of batteries is expensive. When a storage battery is used, the charging system operates in that the apparatus with storage battery is connected to a charger over suitable electric contacts, with suitable leads, connectors or terminals, which establish galvanic contact between the storage battery circuit and the charger circuit.

However, using such galvanic connections in transmitting power gives rise to problems. As they age, contacts become worn and are oxidized, rendering the electricity supply unreliable. Frequently, furthermore, mounting the pipette in the charging rack, or in the charging process on the whole, is awkward. Likewise, when the apparatus is used in medical technology, terminals requiring electric contact, and other connectors, tend to become dirty and to collect impurities, and their washing is difficult, whereby their use is not to be recommended in environments with high hygiene requirements.

The object of the invention is to eliminate the drawbacks discussed above. It is a particular object of the invention to provide a novel pipette charging system which is simple, easy, fast in operation, which requires no separate connecting operations, and which causes no problems associated with cleanliness, described above.

Regarding the features which are characteristic of the invention, reference is made to the claims section.

The charging system for manual pipettes of the invention comprises a charger connected to a power source, e.g. to the electric mains, and a chargeable set of storage batteries in the pipette that is being used. As taught by the invention, in the charger has been provided a primary winding communicating with the power source, and in the pipette has been provided a secondary winding connecting with the set of storage batteries, whereby the primary winding and the secondary winding can be disposed close together, free of galvanic contact, so that the voltage across the primary winding will induce in the secondary winding a voltage which in the secondary circuit causes a current charging the set of storage batteries. Thus, according to the invention the set of storage batteries of the pipette is not in galvanic contact during the charging process with the electrical circuit of the charger, and any problems resulting from electric terminals and other connectors and contacts are thus avoided.

Advantageously there has been arranged at least inside the primary winding in the charger, but also inside the secondary winding in the pipette unless it is desirable to make the pipette as light as possible, cores of suitable magnetic material which direct the path of the magnetic flux through the windings, whereby the stray flux generated will be minimized and the efficiency of the transformer maximized.

Advantageously in the charger is provided a suitable electronic unit to control the operation of the apparatus. Likewise, there may be in the pipette, a control unit controlling the charging of the set of storage batteries and preventing overcharging.

Advantageously, the windings are located, in the charger as well as the pipette, close to their surface, yet covered by a suitable protective shell, whereby they are not in sight, whereby minimal gaps consisting e.g. of plastic are left between the cores of the windings. It is also conceivable that the cores of the windings extend up to the surface of charger as well as pipette, whereby in charging position the mating surfaces of the cores will be in contact, whereby the course of the magnetic flux involves smaller losses.

On the charger as well as the pipette various projections and depressions or equivalent may be used on the mating surfaces meeting each other, which guide the pipette every time to assume exactly a given position for the duration of the charging process, relative to the charger. It is also conceivable to provide on the charger or the pipette, or on both, suitable fixing means, e.g. permanent magnets, which hold the pipette to the charger during the charging process.

It should be noted that the means of the invention has only been developed for use in medical technology, that is, in hospital electronics and expressly on pipettes.

The advantage of the charging system of the invention over prior art is that its use is exceedingly simple and easy, that it involves no components requiring direct galvanic contact or susceptible to getting dirty, and that it enables free shaping of the pieces of apparatus to be used, and smooth surfaces.

In the following the invention is described in details, referring to the drawing attached, wherein:-

Fig. 1 presents a schematic diagram of a charging system according to the invention, and

Fig. 2 presents another charging system according to the invention.

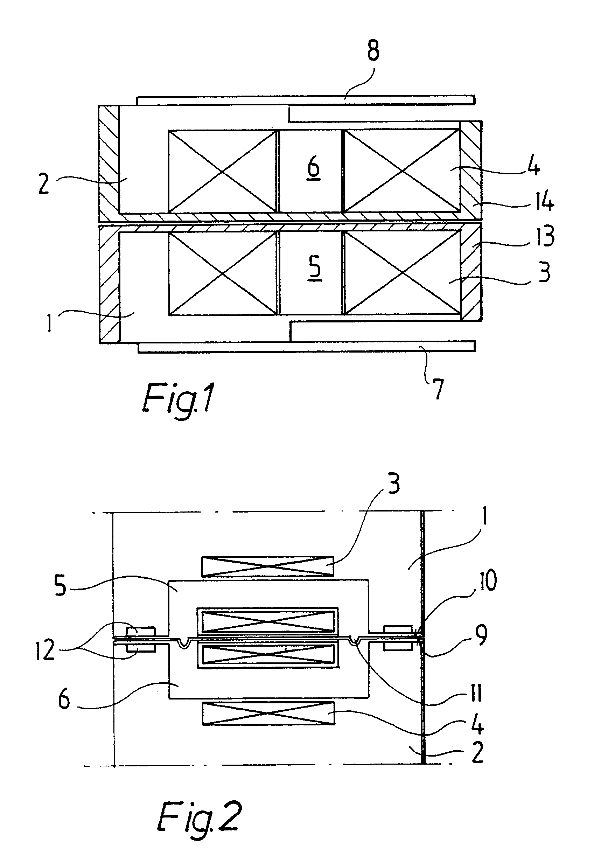

The pipette charging system of the invention depicted in Fig. 1 comprises a charger 1 and a pipette 2 (the set of storage batteries only being schematically shown). In the figure only part of these pieces of apparatus have been shown. Both charger and pipette comprise, furthermore, outer shells 13 and 14 of plastic, or of another suitable material, these shells being positioned substantially against each other when in the charging position. In the charger 1, within the shell 13, has been provided a primary winding 3 having an iron core 5, and at the equivalent point of the pipette has been provided a secondary winding 4, having an iron core. The charger moreover comprises an electronic unit 7, which controls the functions of the charger, and on the pipette a control unit 8 has been provided which controls the functions of the pipette.

When the charger 1 is connected to a suitable power source, a voltage is active across the primary winding 3, under control by the electronic unit 7, this voltage inducing a voltage in the secondary winding in the pipette 2, this voltage depending on the relative numbers of turns of the windings, whereby when the secondary winding is connected to the set of storage batteries in the pipette by control of the control unit 8, the set of storage batteries is charged. In this embodiment the cores of the primary and secondary windings are straight, pin-like members which lie substantially in each other's continuation so that they are only separated by the thin shells of charger and pipette.

In Fig. 2 is presented another charging system according to the invention, wherein the primary winding 3 and the secondary winding 4 have been disposed in the charger 1 and in the pipette 2 close to each other in the charging situation so that the cores 5 and 6 passing through the windings are placed side by side and parallel to each other and they abut on each other at the ends of the windings so that in the charging position the cores constitute a substantially closed circuit for the magnetic flux, and thus, compared with the system of Fig. 1, the stray flux will be as small as possible and the efficiency of the apparatus will improve. Another difference from the embodiment of Fig. 1 is constituted by the register arrangements 11 provided on the mating faces 9 and 10, i.e., eminences on one face and corresponding notches in the other, which facilitate the placing into exactly proper position of charger and pipette for the duration of the charging process. In addition, permanent magnet pieces 12 are employed in the embodiment of Fig. 2, by which the charger and pipette become secured to each other for the duration of the charging process.

In the foregoing the invention has been described by way of example with the aid of the drawing attached, while different embodiments of the invention are feasible within the scope of the inventive idea delimited by the claims.

## Claims

1. Charging system for a manual pipette, comprising a charger (1) connectable to a power source and a set of storage batteries in the pipette (2), characterized in that the charger (1) comprises a primary winding (3) which connects to the power source and the pipette (2) comprises a secondary winding (4) connecting with the set of storage batteries so that when the primary winding and the secondary winding are disposed close to each other, free from galvanic contact with each other, the voltage acting in the primary winding will in the secondary winding induce a voltage which in the secondary circuit produces a current charging the set of storage batteries.

2. Charging system according to claim 1, characterized in that at least to the primary winding (3) but advantageously also to the secondary winding (4) belongs a core (5,6) of suitable, e.g. ferromagnetic material for conducting and directing the magnetic flux between the windings.

3. Charging system according to claim 1 or 2, characterized in that the charger (1) comprises an electronic unit (7) controlling the function of the apparatus.

4. Charging system according to any one of claims 1-3, characterized in that the pipette (2) comprises a control unit (8) controlling the charging process.

5. Charging system according to any one of claims 1-4, characterized in that the cores (5,6) of the windings (3,4) are in the charging position in galvanic contact with each other.

6. Charging system according to any one of claims 2-4, characterized in that the cores (5,6) of the windings (3,4) are in the charging position galvanically isolated from each other.

7. Charging system according to any one of claims 1-6. characterized in that the mating surfaces (9,10), lying against each other, of the charger (1) and the pipette (2) comprise register elements (11) to guide the primary winding and the secondary winding (3,4) into register when charging is being done.

8. Charging system according to any one of claims 1-7, characterized in that the mating surfaces, lying against each other, of the charger (1) and the pipette (2) comprises fixing elements (12), e.g. permanent magnets for holding the charger and the pipette together during the charging process.

Fig.1

Fig.2